# EUROPEAN PATENT APPLICATION

(11) **EP 4 768 371 A1**
(43) Date of publication of application: **01.07.2026**
(21) Application number: 24855326.5
(22) Date of filing: 24.04.2024
(51) Int. Cl.: B62D 25/20, B62D 21/02, B60K 1/04, B62D 21/15, H01M 50/244

(54) **BODY ASSEMBLY FOR VEHICLE, AND VEHICLE**

(30) Priority: 22.08.2023 CN 202311069621
(71) Applicant: Zhejiang Liankong Technologies Co., Ltd., Ningbo, Zhejiang 315336 (CN); Zhejiang Geely Automobile Engineering Technology Development Co., Ltd., Ningbo, Zhejiang 315336 (CN); Zhejiang Geely Holding Group Co., Ltd., Hangzhou, Zhejiang 310051 (CN)
(72) Inventor: YANG, Yanchao, Hangzhou, Zhejiang 310051 (CN); LI, Guibin, Hangzhou, Zhejiang 310051 (CN); YANG, Bin, Hangzhou, Zhejiang 310051 (CN); CHEN, Guilun, Hangzhou, Zhejiang 310051 (CN); WANG, Tongling, Hangzhou, Zhejiang 310051 (CN)
(74) Representative: Range, Christopher William
(86) International application number: PCT/CN2024/089676
(87) International publication number: WO 2025/039596

(57) **Abstract**

Provided are a body assembly (100) of a vehicle and a vehicle. The body assembly (100) of the vehicle includes: a rear floor frame (3) including a longitudinal beam structure (31) and a cross beam structure (32); and a sill beam (4) connected to the longitudinal beam structure (31). The longitudinal beam structure (31) includes a first longitudinal beam body (3111) and a second longitudinal beam body (3113) spaced apart from each other and arranged opposite to each other. The first longitudinal beam body (3111) has an extension beam (313) extending towards the second longitudinal beam body (3113), and/or the second longitudinal beam body (3113) has an extension beam (313) extending towards the first longitudinal beam body (3111). The cross beam structure (32) is connected between the first longitudinal beam body (3111) and the second longitudinal beam body (3113), and is connected to a corresponding extension beam (313) of the extension beams (313).

## Description

### CROSS-REFERENCE TO RELATED APPLICATION

This application is based on and claims priority to Chinese Patent Applications No. 202311069621.0, filed on August 22, 2023, the entire contents of which are incorporated herein by reference.

### FIELD

The present invention relates to the field of vehicles, and in particular, to a body assembly of a vehicle and a vehicle having the same.

### BACKGROUND

In the related art, a rear floor of a vehicle is a part of a vehicle body. Longitudinal beams and cross beams of rear floor frames in existing vehicles are directly joined together. The rear floor frame with such a structural form has poor structural strength and durability, and fails to satisfy structural strength requirements for the vehicle body, which reduces the safety of the vehicle. Moreover, the rear floor frame with such a structural form results in poor NVH (Noise, Vibration, Harshness) performance of the vehicle body, which affects user's driving experience.

### SUMMARY

The present invention aims to at least solve one of the technical problems in the related art to some extent.

To this end, embodiments of the present invention are to provide a body assembly of a vehicle, which has good structural strength and durability and excellent NVH performance.

Embodiments of the present invention are further to provide a vehicle.

The body assembly of the vehicle according to some embodiments of the present invention includes a rear floor frame and a sill beam. The rear floor frame includes a longitudinal beam structure and a cross beam structure. The longitudinal beam structure includes a plurality of longitudinal beam bodies, and the plurality of longitudinal beam bodies includes a first longitudinal beam body and a second longitudinal beam body that are spaced apart from each other and arranged opposite to each other. The first longitudinal beam body has an extension beam extending towards the second longitudinal beam body, and/or the second longitudinal beam body has an extension beam extending towards the first longitudinal beam body. The cross beam structure is connected between the first longitudinal beam body and the second longitudinal beam body. The cross beam structure is connected to a corresponding extension beam of the extension beams. The sill beam is connected to the longitudinal beam structure.

For the body assembly of the vehicle according to the embodiments of the present invention, since the first longitudinal beam body has the extension beam extending towards the second longitudinal beam body, and/or the second longitudinal beam body has the extension beam extending towards the first longitudinal beam body, and the cross beam structure is connected to the corresponding extension beam, structural strength and durability of the rear floor frame can be enhanced. As a result, structural strength requirements for the body assembly can be satisfied, thereby improving the safety of the vehicle. Moreover, the body assembly with such a structural form has good NVH performance, which can enhance user's driving experience.

The vehicle according to embodiments of the present invention includes the body assembly of the vehicle as described above.

Additional aspects and advantages of the present invention will be provided in part in the following description, or will become apparent in part from the following description, or can be learned from practicing of the present invention.

### BRIEF DESCRIPTION OF THE DRAWINGS

FIG. 1 is a schematic view of a rear floor frame according to an embodiment of the present invention.
FIG. 2 is a schematic view of a rear floor frame according to an embodiment of the present invention.
FIG. 3 is a schematic view of a rear floor frame according to an embodiment of the present invention.
FIG. 4 is a schematic bottom view of a body assembly according to an embodiment of the present invention.
FIG. 5 is an enlarged view of part A in FIG. 4.
FIG. 6 is a schematic top view of a body assembly according to an embodiment of the present invention.
FIG. 7 is a schematic view of a body assembly according to an embodiment of the present invention.
FIG. 8 is an enlarged view of part B in FIG. 7.
FIG. 9 is another schematic view of a body assembly according to an embodiment of the present invention.
FIG. 10 is an enlarged view of part C in FIG. 9;
FIG. 11 is a schematic view of a body assembly according to an embodiment of the present invention.

Reference numerals in the specification are as follows:
body assembly 100;
rear floor frame 3;
longitudinal beam structure 31; longitudinal beam body 311; first longitudinal beam body 3111; limiting flange 3112; second longitudinal beam body 3113; extension beam 313; extension beam body 3131; mounting support 3132; extension beam group 314; first extension beam group 3141; second extension beam group 3142; longitudinal beam reinforcement plate 315;
cross beam structure 32; first sub-cross beam 321; second sub-cross beam 322;
third cross beam 33; energy absorption member 34;
sill beam 4; first sill beam 47; first sill rear segment 472; sill rear segment 480;
battery pack 5; first connection member 51; first mounting portion 511; first mounting hole 5111; second connection member 52; second mounting portion 521; second mounting hole 5211; first sub-body 53; second sub-body 54.

### DETAILED DESCRIPTION

Embodiments of the present invention will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present invention.

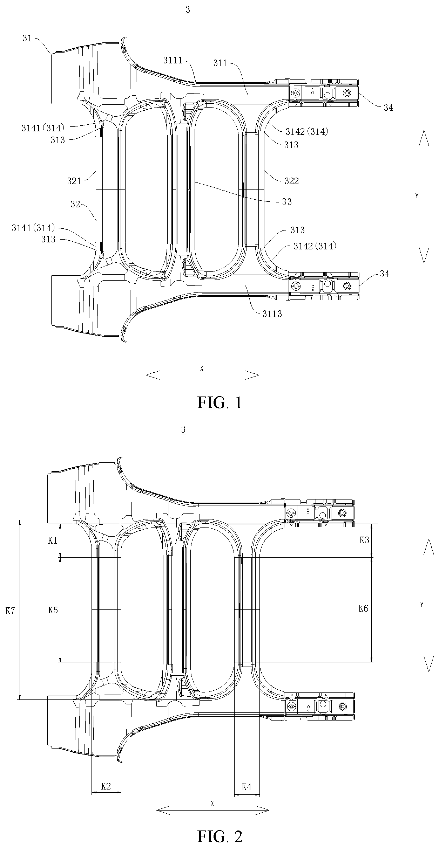

A body assembly 100 of a vehicle according to embodiments of the present invention is described below with reference to FIG. 1 to FIG. 11.

As shown in FIG. 1 to FIG. 11, the body assembly 100 of the vehicle according to the embodiments of the present invention includes a rear floor frame 3 and a sill beam 4.

The rear floor frame 3 includes a longitudinal beam structure 31 and a cross beam structure 32. The longitudinal beam structure 31 may include a plurality of longitudinal beam bodies 311. The plurality of longitudinal beam bodies 311 may include a first longitudinal beam body 3111 and a second longitudinal beam body 3113. In a width direction of the vehicle (i.e., a Y direction shown in FIG. 1), the first longitudinal beam body 3111 and the second longitudinal beam body 3113 may be arranged opposite to each other and spaced apart from each other. Each of the first longitudinal beam body 3111 and the second longitudinal beam body 3113 may extend in a length direction of the vehicle (i.e., a X direction shown in FIG. 1).

The first longitudinal beam body 3111 has an extension beam 313 extending towards the second longitudinal beam body 3113, and/or the second longitudinal beam body 3113 has an extension beam 313 extending towards the first longitudinal beam body 3111. In some exemplary embodiments of the present invention, the first longitudinal beam body 3111 may have an extension beam 313 that may extend towards the second longitudinal beam body 3113. In an exemplary embodiment of the present invention, the extension beam 313 of the first longitudinal beam body 3111 may extend towards the second longitudinal beam body 3113 in the width direction of the vehicle (i.e., the Y direction shown in FIG. 1). In some exemplary embodiments of the present invention, the second longitudinal beam body 3113 may have an extension beam 313 that may extend towards the first longitudinal beam body 3111. In an exemplary embodiment of the present invention, the extension beam 313 of the second longitudinal beam body 3113 may extend towards the first longitudinal beam body 3111 in the width direction of the vehicle (i.e., the Y direction shown in FIG. 1). In some exemplary embodiments of the present invention, each of the first longitudinal beam body 3111 and the second longitudinal beam body 3113 may have the extension beam 313. The extension beam 313 of the first longitudinal beam body 3111 may extend towards the second longitudinal beam body 3113 in the width direction of the vehicle, and the extension beam 313 of the second longitudinal beam body 3113 may extend towards the first longitudinal beam body 3111 in the width direction of the vehicle. It should be understood that when each of the first longitudinal beam body 3111 and the second longitudinal beam body 3113 has the extension beam 313, the extension beam 313 of the first longitudinal beam body 3111 and the extension beam 313 of the second longitudinal beam body 3113 are arranged correspondingly in the width direction of the vehicle.

The cross beam structure 32 is connected between the first longitudinal beam body 3111 and the second longitudinal beam body 3113. Further, the cross beam structure 32 is connected to a corresponding extension beam 313. In an embodiment where the first longitudinal beam body 3111 has the extension beam 313, an end of the cross beam structure 32 may be connected to the extension beam 313 of the first longitudinal beam body 3111, and the other end of the cross beam structure 32 may be connected to the second longitudinal beam body 3113. In an embodiment where the second longitudinal beam body 3113 has the extension beam 313, an end of the cross beam structure 32 may be connected to the extension beam 313 of the second longitudinal beam body 3113, and the other end of the cross beam structure 32 may be connected to the first longitudinal beam body 3111. In an embodiment where each of the first longitudinal beam body 3111 and the second longitudinal beam body 3113 has the extension beam 313, an end of the cross beam structure 32 may be connected to the extension beam 313 of the first longitudinal beam body 3111, and the other end of the cross beam structure 32 may be connected to the extension beam 313 of the second longitudinal beam body 3113. By configuring the first longitudinal beam body 3111 and/or the second longitudinal beam body 3113 into a structure with the extension beam 313 and connecting the cross beam structure 32 to the corresponding extension beam 313, both structural strength and durability of the rear floor frame 3 can be enhanced. Therefore, structural strength requirements for a vehicle body can be satisfied by the body assembly 100. Moreover, the body assembly 100 with such a structure produces low noise and has a low vibration frequency and a small vibration amplitude during its use, which is beneficial to an improvement in NVH performance of the vehicle.

The sill beam 4 is connected to the longitudinal beam structure 31. In some exemplary embodiments of the present invention, a plurality of sill beams 4 may be provided and may include a first sill beam 47 and a second sill beam. Moreover, each sill beam 4 may include a sill beam body and a sill rear segment 480. In an exemplary embodiment of the present invention, the first sill beam 47 may include a first sill beam body and a first sill rear segment 472, and the second sill beam may include a second sill beam body and a second sill rear segment. The sill rear segment 480 may be connected between a corresponding sill beam body and a corresponding longitudinal beam body 311, to allow for the connection between the sill beam 4 and the longitudinal beam structure 31.

The first sill rear segment 472 may be connected between the first sill beam body and the first longitudinal beam body 3111. In an exemplary embodiment of the present invention, an end of the first sill rear segment 472 may be connected to an end of the first sill beam body close to the first longitudinal beam body 3111, and the other end of the first sill rear segment 472 may be connected to an end of the first longitudinal beam body 3111 close to the first sill beam body. The second sill rear segment may be connected between the second sill beam body and the second longitudinal beam body 3113. In an exemplary embodiment of the present invention, an end of the second sill rear segment may be connected to an end of the second sill beam body close to the second longitudinal beam body 3113, and the other end of the second sill rear segment may be connected to an end of the second longitudinal beam body 3113 close to the second sill beam body.

Therefore, by designing the first longitudinal beam body 3111 to have the extension beam 313 extending towards the second longitudinal beam body 3113 and designing the second longitudinal beam body 3113 to have the extension beam 313 extending towards the first longitudinal beam body 3111, and connecting the cross beam structure 32 to the corresponding extension beam 313, the structural strength and durability of the rear floor frame 3 can be enhanced, which enables the body assembly 100 to satisfy the structural strength requirements, thereby improving safety of the vehicle. Moreover, the body assembly 100 with such a structure has excellent NVH performance, which can enhance user's driving experience.

In some embodiments of the present invention, as shown in FIG. 1 and FIG. 2, each of the first longitudinal beam body 3111 and the second longitudinal beam body 3113 may have the extension beam 313, and the extension beam 313 of the first longitudinal beam body 3111 and the extension beam 313 of the second longitudinal beam body 3113 may be arranged to face towards and spaced apart from each other. In an exemplary embodiment of the present invention, the extension beam 313 of the first longitudinal beam body 3111 may extend towards the second longitudinal beam body 3113 in the width direction of the vehicle, and the extension beam 313 of the second longitudinal beam body 3113 may extend towards the first longitudinal beam body 3111 in the width direction of the vehicle. Moreover, the extension beam 313 of the first longitudinal beam body 3111 and the extension beam 313 of the second longitudinal beam body 3113 face towards each other and are spaced apart from each other in the width direction of the vehicle.

Two ends of the cross beam structure 32 are connected to corresponding extension beams 313, respectively. In other words, one end of the cross beam structure 32 may be connected to the extension beam 313 of the first longitudinal beam body 3111, and the other end of the cross beam structure 32 may be connected to the extension beam 313 of the second longitudinal beam body 3113. With such an arrangement, the structural strength and durability of the rear floor frame 3 can be enhanced, which enables the body assembly 100 to satisfy the structural strength requirements for the vehicle body. Moreover, it is beneficial to a reduction in the noise and vibration of the body assembly 100 during its use.

In some embodiments of the present invention, as shown in FIG. 1 and FIG. 2, each of the first longitudinal beam body 3111 and the second longitudinal beam body 3113 may have a plurality of extension beams 313, and the plurality of extension beams 313 of the first longitudinal beam body 3111 and the plurality of extension beams 313 of the second longitudinal beam body 3113 may be arranged in one-to-one correspondence to form a plurality of extension beam groups 314.

Each of the first longitudinal beam body 3111 and the second longitudinal beam body 3113 may have two, three, or four extension beams 313 However, the present invention is not limited in this regard. It should be explained that the number of extension beams 313 provided on the first longitudinal beam body 3111 is the same as the number of extension beams 313 provided on the second longitudinal beam body 3113. For example, when the first longitudinal beam body 3111 has two extension beams 313, the second longitudinal beam body 3113 also has two extension beams 313, and the two extension beams 313 of the first longitudinal beam body 3111 and the two extension beams 313 of the second longitudinal beam body 3113 are arranged in one-to-one correspondence. That is, one of the extension beams 313 of the first longitudinal beam body 3111 and one of the extension beams 313 of the second longitudinal beam body 3113 are arranged to face towards and spaced apart from each other in the width direction of the vehicle to form an extension beam group 314, and the other one of the extension beams 313 of the first longitudinal beam body 3111 and the other one of the extension beams 313 of the second longitudinal beam body 3113 are arranged to face towards and spaced apart from each other in the width direction of the vehicle to form another extension beam group 314.

The cross beam structure 32 may be connected between two extension beams 313 of each of the plurality of extension beam groups 314. As an example, each of the first longitudinal beam body 3111 and the second longitudinal beam body 3113 has two extension beams 313. The cross beam structure 32 may be connected between one of the extension beams 313 of the first longitudinal beam body 3111 and one of the extension beams 313 of the second longitudinal beam body 3113, and the cross beam structure 32 may be connected between the other one of the extension beams 313 of the first longitudinal beam body 3111 and the other one of the extension beams 313 of the second longitudinal beam body 3113. With such an arrangement, the structural strength and durability of the rear floor frame 3 can be further enhanced, and the NVH performance of the body assembly 100 can be further improved.

In some embodiments of the present invention, as shown in FIG. 1 and FIG. 2, the plurality of extension beam groups 314 may be sequentially arranged at intervals in a first direction of the rear floor frame 3 (i.e., the length direction of the vehicle, i.e., the X direction shown in FIG. 1). That is, there are spacings between the plurality of extension beam groups 314 in a second direction. With such an arrangement, the plurality of extension beam groups 314 may be arranged in reasonable form, and structural strengths of the rear floor frame 3 at various positions can be balanced. Moreover, it should be noted that if the plurality of extension beam groups 314 are arranged too close to each other, it may be difficult to manufacture the rear floor frame 3 (which is related to the manufacturing process). By arranging the plurality of extension beam groups at intervals sequentially in the second direction, it is beneficial to a reduction in the manufacturing difficulty of the rear floor frame 3.

In some embodiments of the present invention, as shown in FIG. 1 and FIG. 2, the plurality of extension beam groups 314 may include a first extension beam group 3141 and a second extension beam group 3142. The first extension beam group 3141 and the second extension beam group 3142 may be arranged at intervals in the first direction. The cross beam structure 32 may include a first sub-cross beam 321 and a second sub-cross beam 322. The first sub-cross beam 321 may be connected between two extension beams 313 of the first extension beam group 3141, and the second sub-cross beam 322 may be connected between two extension beams 313 of the second extension beam group 3142.

In an exemplary embodiment of the present invention, the first extension beam group 3141 may include two extension beams 313. One of the two extension beams 313 is the extension beam 313 of the first longitudinal beam body 3111, and the other one of the two extension beams 313 is the extension beam 313 of the second longitudinal beam body 3113. The first sub-cross beam 321 may be connected between the two extension beams 313 of the first extension beam group 3141. The second extension beam group 3142 may include two extension beams 313. One of the two extension beams 313 is the extension beam 313 of the first longitudinal beam body 3111, and the other one of the two extension beams 313 is the extension beam 313 of the second longitudinal beam body 3113. The second sub-cross beam 322 may be connected between the two extension beams 313 of the second extension beam group 3142. With such an arrangement, it is possible to allow the rear floor frame 3 to have two extension beam groups 314, which can enhance the structural strength of the rear floor frame 3 and simplify the manufacture of the rear floor frame 3.

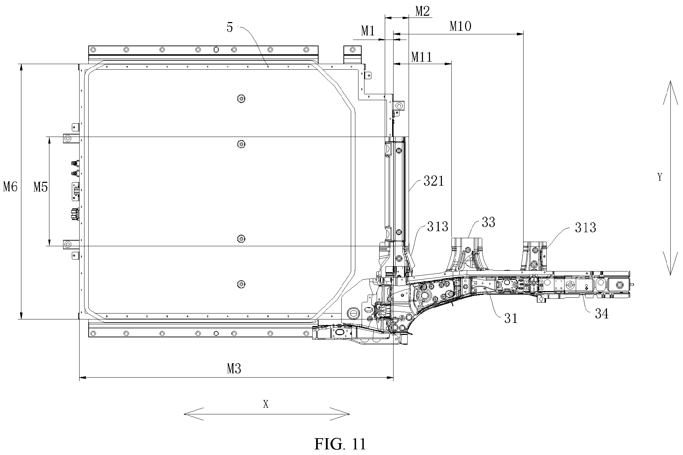

In some embodiments of the present invention, as shown in FIG. 11, the body assembly 100 may further include a battery pack 5.

In a second direction of the rear floor frame 3 (i.e., a height direction of the vehicle), an overlapping region exists between an orthographic projection of the cross beam structure 32 and an orthographic projection of the battery pack 5. In other words, a plane is defined to be perpendicular to the height direction of the vehicle, i.e., a normal line of the plane is parallel to the height direction of the vehicle. An overlapping region exists between an orthographic projection of the cross beam structure 32 on this plane and an orthographic projection of the battery pack 5 on this plane. With such an arrangement, when the vehicle is subjected to a compressive force in a Z direction, the cross beam structure 32 may bear the compressive force and transmit it to the longitudinal beam structure 31. In this way, the battery pack 5 can be prevented from being subjected to the compressive force in the Z direction, or the compressive force in the Z direction borne by the battery pack 5 can be reduced, which is beneficial to an improvement in the safety of the vehicle.

In some embodiments of the present invention, as shown in FIG. 1 to FIG. 3, in the first direction of the rear floor frame 3 (i.e., the length direction of the vehicle, i.e., the X direction shown in FIG. 1), a distance between the first sub-cross beam 321 and a front end of the longitudinal beam structure 31 may be smaller than a distance between the first sub-cross beam 321 and a rear end of the longitudinal beam structure 31.

In some exemplary embodiments of the present invention, the first sub-cross beam 321 may extend in the width direction of the vehicle, and each of two ends of the first sub-cross beam 321 may be connected to the extension beam 313. In the first direction (i.e., the length direction of the vehicle, i.e., the X direction shown in FIG. 1), the distance between the first sub-cross beam 321 and the front end of the longitudinal beam structure 31 may be smaller than the distance between the first sub-cross beam 321 and the rear end of the longitudinal beam structure 31. In other words, the first sub-cross beam 321 may be located at a position slightly forward of the middle of the longitudinal beam structure 31. With such an arrangement, an arrangement position for the first sub-cross beam 321 can be made reasonable, and a structural strength of a front-middle segment of the rear floor frame 3 can be enhanced.

In the second direction (i.e., the height direction of the vehicle), an overlapping region may exist between an orthographic projection of the first sub-cross beam 321 and an orthographic projection of the battery pack 5. The second direction is perpendicular to the first direction. With such an arrangement, when the vehicle is subjected to the compressive force in the Z direction, the first sub-cross beam 321 may bear the compressive force and transmit it to the longitudinal beam structure 31. In this way, the battery pack 5 can be prevented from being subjected to the compressive force in the Z direction, or the compressive force in the Z direction borne by the battery pack 5 can be reduced, which is beneficial to the improvement of the safety of the vehicle.

In some embodiments of the present invention, as shown in FIG. 11, in the first direction (i.e., the length direction of the vehicle, i.e., the X direction shown in FIG. 11), a width of the overlapping region may be M1, and a width of the first sub-cross beam 321 may be M2, where 0.25M2≤M1≤0.45M2, i.e., M1 may be any value ranging from 0.25M2 to 0.45M2. For example, M1 may be, but not limited to, 0.25M2, 0.35M2, 0.45M2, or the like. With such an arrangement, it is possible to allow for a reasonable proportional relationship between the width M1 of the overlapping region between the orthographic projection of the first sub-cross beam 321 and the orthographic projection of the battery pack 5 in the first direction and the width M2 of the first sub-cross beam 321. Therefore, reliable protection can be provided for the battery pack 5 in the Z direction.

In some embodiments of the present invention, as shown in FIG. 11, in the first direction (i.e., the length direction of the vehicle, i.e., the X direction shown in FIG. 11), a length of the battery pack 5 may be M3, where 0.045M3≤M2≤0.115M3, i.e., M2 may be any value ranging from 0.045M3 to 0.115M3. For example, M2 may be, but not limited to, 0.045M3, 0.076M3, 0.115M3, or the like. With such an arrangement, it is possible to allow for a reasonable proportional relationship between the width M2 of the first sub-cross beam 321 and the length M3 of the battery pack 5. In this way, it is possible to allow the first sub-cross beam 321 to have a sufficient width and thus sufficient impact resistance, which is beneficial to providing reliable protection for the battery pack 5.

In some embodiments of the present invention, as shown in FIG. 1 to FIG. 3, a distance between the second sub-cross beam 322 and a front end of the longitudinal beam structure 31 may be greater than a distance between the second sub-cross beam 322 and a rear end of the longitudinal beam structure 31.

In some exemplary embodiments of the present invention, the second sub-cross beam 322 may extend in the width direction of the vehicle, and each of two ends of the second sub-cross beam 322 may be connected to the extension beam 313. In the first direction (i.e., the length direction of the vehicle, i.e., the X direction shown in FIG. 1), the distance between the second sub-cross beam 322 and the front end of the longitudinal beam structure 31 may be greater than the distance between the second sub-cross beam 322 and the rear end of the longitudinal beam structure 31. In other words, the second sub-cross beam 322 may be located at a position slightly rearward of the middle of the longitudinal beam structure 31. With such an arrangement, an arrangement position for the second sub-cross beam 322 can be made reasonable, and a structural strength of a middle-rear segment of the rear floor frame 3 can be enhanced.

It should be understood that since the first sub-cross beam 321 is located slightly forward of the middle of the longitudinal beam structure 31, and the first extension beam group 3141 is also located slightly forward of the middle of the longitudinal beam structure 31. That is, the distance between the first extension beam group 3141 and the front end of the longitudinal beam structure 31 is smaller than the distance between the first extension beam group 3141 and the rear end of the longitudinal beam structure 31. With such an arrangement, arrangement positions for the first sub-cross beam 321 and the first extension beam group 3141 can be made reasonable, and the structural strength of the front-middle segment of the rear floor frame 3 can be enhanced.

It should be understood that since the second sub-cross beam 322 is located slightly rearward of the middle of the longitudinal beam structure 31, and the second extension beam group 3142 is also located slightly rearward of the middle of the longitudinal beam structure 31. That is, the distance between the second extension beam group 3142 and the front end of the longitudinal beam structure 31 is greater than the distance between the second extension beam group 3142 and the rear end of the longitudinal beam structure 31. With such an arrangement, arrangement positions for the second sub-cross beam 322 and the second extension beam group 3142 can be made reasonable, and the structural strength of the middle-rear segment of the rear floor frame 3 can be enhanced.

In some embodiments of the present invention, as shown in FIG. 11, in a third direction of the rear floor frame 3 (i.e., the width direction of the vehicle, i.e., the Y direction shown in FIG. 11), a length of the first sub-cross beam 321 may be M5, and a width of the battery pack 5 may be M6, where 0.25M6≤M5≤0.5M6, i.e., M5 may be any value ranging from 0.25M6 to 0.5M6. For example, M5 may be, but not limited to, 0.25M6, 0.334M6, 0.40M6, 0.5M6, or the like. With such an arrangement, it is possible to allow for a reasonable proportional relationship between the length M5 of the first sub-cross beam 321 and the width M6 of the battery pack 5. In this way, it is possible to allow the first sub-cross beam 321 to have a sufficient length and thus sufficient impact resistance, which is beneficial to providing reliable protection for the battery pack 5.

The third direction is perpendicular to both the first direction and the second direction.

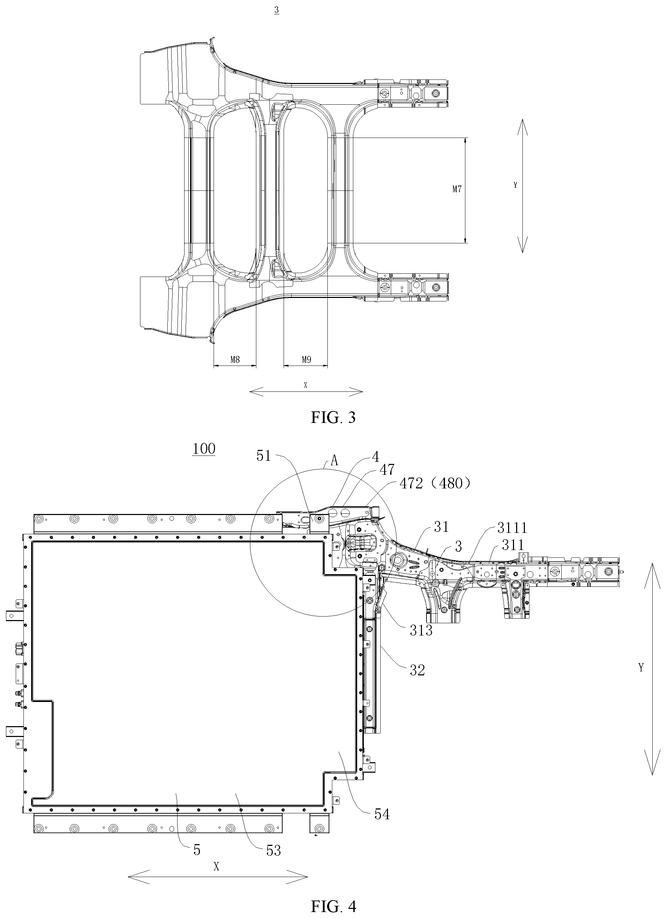

In some embodiments of the present invention, as shown in FIG. 3 and FIG. 11, in the third direction (i.e., the width direction of the vehicle, i.e., the Y direction shown in FIG. 3), a length of the second sub-cross beam 322 may be M7, and the width of the battery pack 5 may be M6, where 0.25M6≤M7≤0.5M6, i.e., M7 may be any value ranging from 0.25M6 to 0.5M6. For example, M7 may be, but not limited to, 0.25M6, 0.334M6, 0.40M6, 0.5M6, or the like. In an event of a rear collision of the vehicle, the second sub-cross beam 322 will bear the impact prior to the first sub-cross beam 321. With such an arrangement, it is possible to allow for a reasonable proportional relationship between the length M7 of the second sub-cross beam 322 and the width M6 of the battery pack 5, and allow the second sub-cross beam 322 to have sufficient impact resistance.

Moreover, by limiting the proportional relationship between the length M5 of the first sub-cross beam 321 and the width M6 of the battery pack 5 and the proportional relationship between the length M7 of the second sub-cross beam 322 and the width M6 of the battery pack 5, a relationship between a size of the entire cross beam structure 32 and a size of the battery pack 5 can be made reasonable, which is beneficial to providing reliable protection for the battery pack 5.

In some exemplary embodiments of the present invention, the rear floor frame 3 may employ an integrated cold stamping forming process. With this solution, a material utilization rate can be improved, manufacturing costs can be reduced, and a weight of the rear floor frame 3 can be reduced, which is beneficial to the realization of a lightweight design of the vehicle. Moreover, by using the integrated cold stamping forming process, it is beneficial to precise control of a size of the rear floor frame 3, and thus, the stability of dimension matching quality of the vehicle body can be ensured. In addition, by using this process, simplification of components can be realized to lower the difficulty of device and tooling matching, the manufacturing process can be reduced, and manufacturing efficiency can be improved.

In some exemplary embodiments of the present invention, the integrated cold stamping forming process may involve performing laser tailor-welding of a sheet metal, followed by laser cutting, and finally integral forming. In some exemplary embodiments of the present invention, the first sub-cross beam 321 and the extension beam 313 may be connected by laser tailor-welding, and the second sub-cross beam 322 and the extension beam 313 may be connected by laser tailor-welding. With such an arrangement, an overlapping flange of the first sub-cross beam 321 and the second sub-cross beam 322 can be reduced, which is beneficial to weight reduction and cost reduction.

In some exemplary embodiments of the present invention, as shown in FIG. 1, a connection between the extension beam 313 and the first longitudinal beam body 3111 and a connection between the extension beam 313 and the second longitudinal beam body 3113 may be transitioned through arcs. In this way, the difficulty of stamping forming can be reduced.

In some embodiments of the present invention, as shown in FIG. 4 to FIG. 10, the body assembly 100 may further include a battery pack 5. The battery pack 5 may provide power for a motor of the vehicle. The battery pack 5 has a first connection member 51 connected to an end of the sill beam 4 close to the longitudinal beam structure 31. The end of the sill beam 4 close to the longitudinal beam structure 31 may be the sill rear segment 480. In some exemplary embodiments of the present invention, a plurality of first connection members 51 may be provided and may be connected to corresponding sill rear segments 480. In some exemplary embodiments of the present invention, the first connection members 51 and the corresponding sill rear segments 480 may be connected through, but not limited to, screwing or welding.

It should be noted that the vehicle body has a rear suspension hard site and a hanger hard site. The rear suspension hard site may be used for being connected to a rear suspension of the vehicle, and the hanger hard site may be used for cooperating with a hanger, which may be a tool used for handling and moving the vehicle body during the manufacturing of the vehicle body. When the battery pack 5 is connected to the vehicle body, it is necessary to allow the battery pack 5 to avoid the rear suspension hard site and the hanger hard site to prevent the battery pack 5 from shielding the rear suspension hard site and the hanger hard site, resulting in difficulty in arranging a mounting site of the battery pack 5 and great design difficulty of the vehicle.

In the present invention, by connecting the first connection member 51 of the battery pack 5 to the end of the sill beam 4 close to the longitudinal beam structure 31, the mounting site may be provided for the battery pack 5 through the end of the sill beam 4 close to the longitudinal beam structure 31, which can reduce the difficulty in arranging the mounting site of the battery pack 5.

Therefore, by connecting the first connection member 51 to the end of the sill beam 4 close to the longitudinal beam structure 31, the mounting site may be provided for the battery pack 5 through the end of the sill beam 4 close to the longitudinal beam structure 31, which can make it easy to avoid the rear suspension hard site and the hanger hard site of the vehicle body when the mounting site of the battery pack 5 is arranged, can reduce the difficulty in arranging the mounting site of the battery pack 5, and thus is beneficial to a reduction in the design difficulty of the vehicle.

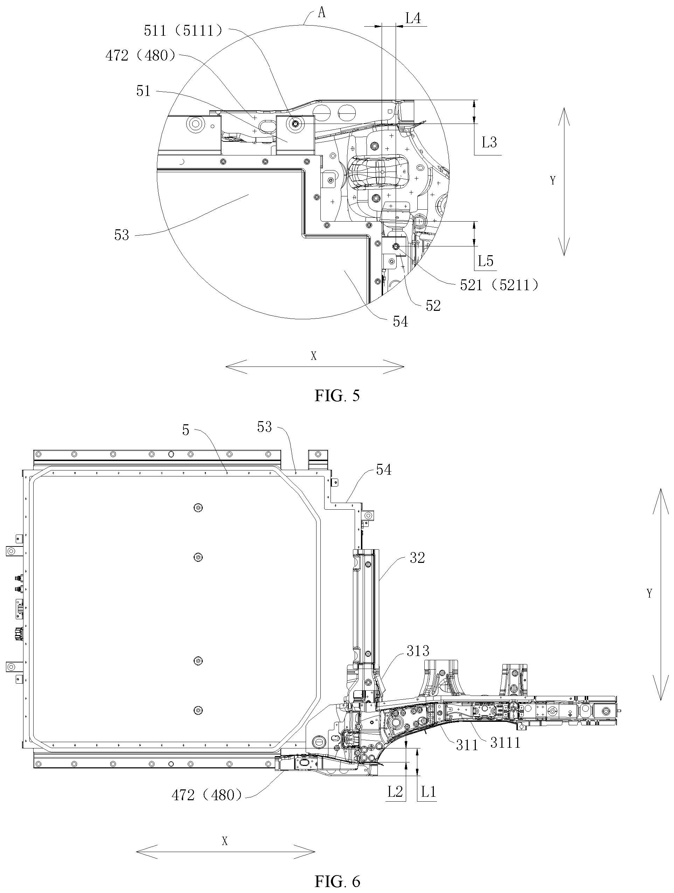

In some embodiments of the present invention, as shown in FIG. 6, in the third direction of the body assembly 100 (i.e., the width direction of the vehicle, i.e., the Y direction shown in FIG. 6), a spacing between a side of the sill beam 4 away from the battery pack 5 and the battery pack 5 may be L1. In some embodiments, it should be understood that a spacing between a side of the end of the sill beam 4 close to the longitudinal beam structure 31 that is away from the battery pack 5 and the battery pack 5 may be L1. In some embodiments, it should be understood that a spacing between a side of the sill rear segment 480 away from the battery pack 5 and the battery pack 5 may be L1. In the third direction of the body assembly 100 (i.e., the width direction of the vehicle, i.e., the Y direction shown in FIG. 6), the spacing between the side of the longitudinal beam structure 31 away from the battery pack 5 and the battery pack 5 may be L2. In some embodiments, it should be understood that a spacing between a side of the longitudinal beam body 311 away from the battery pack 5 and the battery pack 5 may be L2.

L1 and L2 may satisfy the relational expression: L2<L1, meaning that the spacing between the side of the sill beam 4 away from the battery pack 5 and the battery pack 5 is greater than the spacing between the side of the longitudinal beam structure 31 away from the battery pack 5 and the battery pack 5. With such an arrangement, a connection between the first connection member 51 and the end of the sill beam 4 close to the longitudinal beam structure 31 can be facilitated, which can reduce the assembly difficulty of the battery pack 5. Moreover, a large number of mounting sites can be provided for the battery pack 5 through the sill beam 4, which can reduce the difficulty in arranging the mounting sites of the battery pack 5.

In some embodiments of the present invention, in the third direction (i.e., the width direction of the vehicle, i.e., the Y direction shown in FIG. 6), there may be a spacing between the battery pack 5 and the sill beam 4. It should be understood that the sill beam 4 may include a plurality of sill beam bodies, and the plurality of sill beam bodies may include a first sill beam body and a second sill beam body, with the battery pack 5 located between the first sill beam body and the second sill beam body.

In an exemplary embodiment of the present invention, as shown in FIG. 6, the battery pack 5 may include a first sub-body 53 and a second sub-body 54 connected to each other, and each of the first sub-body 53 and the second sub-body 54 is located between the first sill beam body and the second sill beam body. With such an arrangement, a relative position between the battery pack 5 and the sill beam 4 can be made reasonable, and a probability that interference occurs between the battery pack 5 and the sill beam 4 during mounting of the battery pack 5 can be reduced. Moreover, in the event of a side collision of the vehicle, the spacing between the battery pack 5 and the sill beam 4 may absorb a part of the impact, which can reduce the impact on the battery pack 5 and is beneficial to the improvement of the safety of the vehicle.

In some embodiments of the present invention, as shown in FIG. 5, the first connection member 51 may have a first mounting portion 511 adapted to be mounted to the sill beam 4 in a fitting manner. In the third direction (i.e., the width direction of the vehicle, i.e., the Y direction shown in FIG. 5), a spacing between the first mounting portion 511 and the longitudinal beam structure 31 may be L3, where 30 mm≤L3≤80 mm.

In an exemplary embodiment of the present invention, a spacing between the first mounting portion 511 and a corresponding longitudinal beam body 311 may be L3. In some exemplary embodiments of the present invention, the first mounting portion 511 may be configured as a first mounting hole 5111, and the first mounting hole 5111 and the sill beam 4 may be mounted together through bolts. The spacing between the first mounting portion 511 and the corresponding longitudinal beam body 311 may be L3, and L3 may be any value ranging from 30 mm to 80 mm. For example, L3 may be, but not limited to, 30 mm, 50 mm, 80 mm, or the like. It should be explained that when the first mounting portion 511 is configured as the first mounting hole 5111, L3 may be understood as a spacing between a central axis of the first mounting hole 5111 and the corresponding longitudinal beam body 311. With such an arrangement, the spacing between the first mounting portion 511 and the longitudinal beam structure 31 can be made reasonable, which is beneficial to an improvement in an overall strength of the body assembly 100.

In some exemplary embodiments of the present invention, the smaller the spacing between the first mounting portion 511 and the longitudinal beam structure 31, the higher the overall strength of the body assembly 100.

In some embodiments of the present invention, as shown in FIG. 4 and FIG. 5, a plurality of sill beams 4 may be provided and arranged at intervals in the third direction (i.e., the width direction of the vehicle, i.e., the Y direction shown in FIG. 4). In some exemplary embodiments of the present invention, the plurality of sill beams 4 may include a first sill beam 47 and a second sill beam, and the first sill beam 47 and the second sill beam may be spaced apart from each other in the third direction. Moreover, each sill beam 4 may include a sill beam body and a sill rear segment 480. In an exemplary embodiment of the present invention, the first sill beam 47 may include a first sill beam body and a first sill rear segment 472, and the second sill beam may include a second sill beam body and a second sill rear segment. The sill rear segment 480 may be connected between a corresponding sill beam body and a corresponding longitudinal beam body 311 to allow for the connection between the sill beam 4 and the longitudinal beam structure 31.

A plurality of first connection members 51 may be provided and arranged at two opposite sides of the battery pack 5 in the first direction. The plurality of first connection members 51 may be connected to corresponding sill beams 4, respectively. In some exemplary embodiments of the present invention, two first connection members 51 may be provided and arranged at the two opposite sides of the battery pack 5 in the third direction. One of the first connection members 51 may be connected to the first sill rear segment 472 of the first sill beam 47, and the other one of the first connection members 51 may be connected to the second sill rear segment of the second sill beam. With such an arrangement, it is possible to allow each of the two sides of the battery pack 5 to have a connection part with the sill beam 4, and connection firmness between the battery pack 5 and the sill beam 4 can be improved.

In some embodiments of the present invention, as shown in FIG. 5, the battery pack 5 may further have a second connection member 52, and the second connection member 52 may be connected to a corresponding extension beam 313 by, but not limited to, screwing or welding. In some exemplary embodiments of the present invention, each of the first longitudinal beam body 3111 and the second longitudinal beam body 3113 may have an extension beam 313, and two second connection members 52 may be provided. One of the second connection members 52 may be connected to the extension beam 313 of the first longitudinal beam body 3111, and the other one of the second connection members 52 may be connected to the extension beam 313 of the second longitudinal beam body 3113. With such an arrangement, the battery pack 5 may be connected to the longitudinal beam structure 31 of the rear floor frame 3, which is beneficial to an improvement in mounting firmness of the battery pack 5.

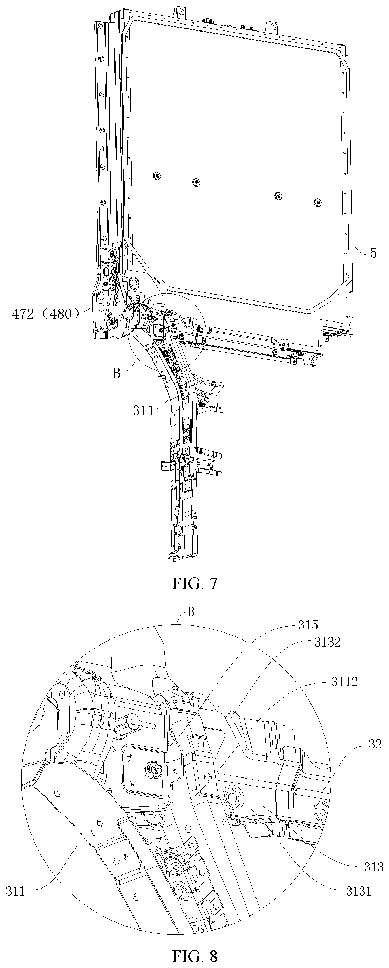

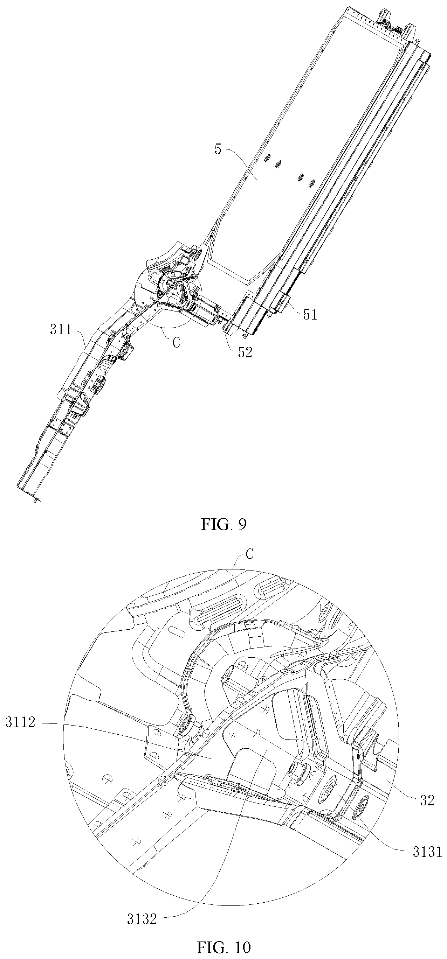

In some embodiments of the present invention, as shown in FIG. 8 and FIG. 10, the extension beam 313 may include an extension beam body 3131 and a mounting support 3132 connected to each other, i.e., the mounting support 3132 is disposed at the extension beam body 3131. In some exemplary embodiments of the present invention, an open cavity may be defined by the extension beam body 3131, at least part of a structure of the mounting support 3132 may be disposed in the cavity, and the second connection member 52 may be connected to the mounting support 3132. In some exemplary embodiments of the present invention, in a height direction of the body assembly 100, a part of the structure of the extension beam body 3131 may be located between the mounting support 3132 and the second connection member 52.

In the third direction (i.e., the width direction of the vehicle, i.e., the Y direction shown in FIG. 4), each of the extension beam body 3131 and the mounting support 3132 may be located at an inner side of a corresponding longitudinal beam body 311 and may be connected to the corresponding longitudinal beam body 311. In some exemplary embodiments of the present invention, the extension beam body 3131 and the corresponding longitudinal beam body 311 may be integrally formed, and may be connected by, but not limited to, welding or screwing. By providing the mounting support 3132, a structural strength of the extension beam 313 can be enhanced. Moreover, it is also convenient to providing a connection member, such as a nut, which can reduce connection difficulty of the second connection member 52 and the extension beam 313.

In some embodiments of the present invention, as shown in FIG. 8 and FIG. 10, the longitudinal beam body 311 may have a limiting flange 3112, and the limiting flange 3112 may be located at a side of the longitudinal beam body 311 close to the extension beam 313.

The longitudinal beam structure 31 may further include a plurality of longitudinal beam reinforcement plates 315 that may be disposed at corresponding longitudinal beam bodies 311, respectively. In an exemplary embodiment of the present invention, the longitudinal beam structure 31 may include two longitudinal beam reinforcement plates 315. One of the longitudinal beam reinforcement plates 315 may be disposed at the first longitudinal beam body 3111, and the other one of the longitudinal beam reinforcement plates 315 may be disposed at the second longitudinal beam body 3113. In the third direction (i.e., the width direction of the vehicle, i.e., the Y direction shown in FIG. 4), the longitudinal beam reinforcement plate 315 may be located at an outer side of the limiting flange 3112 of the corresponding longitudinal beam body 311, and may be connected to the limiting flange 3112 of the corresponding longitudinal beam body 311. By providing the longitudinal beam reinforcement plate 315, a structural strength of the longitudinal beam structure 31 can be increased.

Moreover, the longitudinal beam reinforcement plate 315 is located at the outer side of the limiting flange 3112 of the corresponding longitudinal beam body 311, and the mounting support 3132 is located at an inner side of the limiting flange 3112 of the corresponding longitudinal beam body 311. Each of the longitudinal beam reinforcement plate 315 and the mounting support 3132 may have a flange, and the flange of the longitudinal beam reinforcement plate 315 and the flange of the mounting support 3132 abut against two sides of the limiting flange 3112, respectively. With such an arrangement, it is possible to provide the longitudinal beam body 311 with support in the Y direction through the mounting support 3132 and the longitudinal beam reinforcement plate 315, which can increase the structural strength of the longitudinal beam structure 31.

In some embodiments of the present invention, as shown in FIG. 5, the second connection member 52 may have a second mounting portion 521 adapted to be mounted to the extension beam 313 in a fitting manner. In the first direction of the body assembly 100 (i.e., the length direction of the vehicle, i.e., the X direction shown in FIG. 5), a spacing between the second mounting portion 521 and the battery pack 5 may be L4, where 1 mm ≤ L4 ≤ 60 mm. The second direction is perpendicular to the first direction.

In some exemplary embodiments of the present invention, the second mounting portion 521 may be configured as a second mounting hole 5211, and the second mounting hole 5211 and a corresponding extension beam 313 may be mounted together through bolts. The spacing between the second mounting portion 521 and the battery pack 5 may be L4, and L4 may be any value ranging from 1 mm to 60 mm. For example, L4 may be, but not limited to, 20 mm, 30 mm, 40 mm, 50 mm, 60 mm, or the like. In some exemplary embodiments of the present invention, L4 may be 50 mm. When the second mounting portion 521 is configured as the second mounting hole 5211, L4 may be understood as a spacing between a central axis of the second mounting hole 5211 and the battery pack 5. With such an arrangement, the spacing between the second mounting portion 521 and the battery pack 5 can be made reasonable, which is beneficial to the improvement of the overall strength of the body assembly 100.

In some exemplary embodiments of the present invention, the extension beam body 3131 may have an avoidance hole to avoid the bolt, which enables the second mounting hole 5211 to be connected to the mounting support 3132 of the corresponding extension beam 313.

It should be noted that in the present invention, the first direction, the second direction, and the third direction are each perpendicular to each other.

In some embodiments of the present invention, as shown in FIG. 4 and FIG. 6, the battery pack 5 may include a first sub-body 53 and a second sub-body 54 connected to each other. In the third direction (i.e., the width direction of the vehicle, i.e., the Y direction shown in FIG. 4), a width of the second sub-body 54 is smaller than a width of the first sub-body 53. The second connection member 52 may be located at an end of the second sub-body 54 away from the first sub-body 53, and the first connection member 51 may be located at a side edge of the first sub-body 53.

In some exemplary embodiments of the present invention, each of two first connection members 51 and two second connection members 52 may be provided. The two first connection members 51 may be spaced apart from each other in the first direction, and the two second connection members 52 may be spaced apart from each other in the third direction. Since the width of the second sub-body 54 is smaller than the width of the first sub-body 53, the second connection members 52 are located at the end of the second sub-body 54 away from the first sub-body 53, and the first connection members 51 are located at the side edge of the first sub-body 53, the two second connection members 52 and the two first connection members 51 may be located at four corners of a trapezoid. With such an arrangement, it is beneficial to an improvement in torsional stiffness and dynamic stiffness durability of the body assembly 100. Moreover, with this arrangement, it is possible to allow for firm mounting of the battery pack 5, and reduce the vibration of the battery pack 5 during vehicle operation. Therefore, the NVH (Noise, Vibration, Harshness) performance of the vehicle is improved.

In some embodiments of the present invention, as shown in FIG. 5, in the third direction (i.e., the width direction of the vehicle, i.e., the Y direction shown in FIG. 4), a spacing between the second mounting portion 521 and the side edge of the second sub-body 54 may be L5, where 50 mm ≤ L5 ≤ 80 mm, i.e., L5 may be any value ranging from 50 mm to 80 mm. For example, L5 may be, but not limited to, 50 mm, 60 mm, 70 mm, 80 mm, or the like. When the second mounting portion 521 is configured as the second mounting hole 5211, L5 may be understood as a spacing between the central axis of the second mounting hole 5211 and the side edge of the second sub-body 54. With such an arrangement, an arrangement position for the second mounting portion 521 can be made reasonable, which is beneficial to ensuring the mounting firmness of the battery pack 5.

In some embodiments of the present invention, as shown in FIG. 1 and FIG. 2, in the third direction (i.e., the width direction of the vehicle, i.e., the Y direction shown in FIG. 1), an extension dimension of the extension beams 313 of the first extension beam group 3141 may be K1. In an exemplary embodiment of the present invention, each of extension dimensions of extension beams 313 of the first extension beam group 3141 may be K1. In the first direction (i.e., the length direction of the vehicle, i.e., the X direction shown in FIG. 1), the width of the first sub-cross beam 321 may be K2, where 3K2 ≤ K1 ≤ 13K2, i.e., K1 may be any value ranging from 3 times K2 to 13 times K2. For example, K1 may be, but not limited to, 3K2, 8K2, 13K2, or the like. With such an arrangement, it is possible to allow for a reasonable proportional relationship between the extension dimension of the extension beam 313 of the first extension beam group 3141 and the width of the first sub-cross beam 321, which is beneficial to ensuring the structural strength of the front-middle segment of the rear floor frame 3. Moreover, the structural strengths of the rear floor frame 3 at various positions can be made balanced, and the occurrence of an obvious force-resistant weak site (i.e., a position prone to fracture) is avoided.

In some embodiments of the present invention, as shown in FIG. 1 and FIG. 2, in the third direction (i.e., the width direction of the vehicle, i.e., the Y direction shown in FIG. 1), an extension dimension of the extension beams 313 of the second extension beam group 3142 may be K3. In an exemplary embodiment of the present invention, each of extension dimensions of extension beams 313 of the second extension beam group 3142 may be K3. In the first direction (i.e., the length direction of the vehicle, i.e., the X direction shown in FIG. 1), a width of the second sub-cross beam 322 may be K4, where 3K4 ≤ K3 ≤ 13K4, i.e., K3 may be any value ranging from 3 times K4 to 13 times K4. For example, K3 may be, but not limited to, 3K4, 8K4, 13K4, or the like. With such an arrangement, it is possible to allow for a reasonable proportional relationship between the extension dimension of the extension beam 313 of the second extension beam group 3142 and the width of the second sub-cross beam 322, which is beneficial to ensuring the structural strength of the middle-rear segment of the rear floor frame 3. Moreover, the structural strengths of the rear floor frame 3 at various positions can be made balanced, and the occurrence of the obvious force-resistant weak site (i.e., the position prone to fracture) is avoided.

It should be noted that by setting the distance between the first sub-cross beam 321 and the front end of the longitudinal beam structure 31 to be smaller than the distance between the first sub-cross beam 321 and the rear end of the longitudinal beam structure 31 and setting the distance between the second sub-cross beam 322 and the front end of the longitudinal beam structure 31 to be greater than the distance between the second sub-cross beam 322 and the rear end of the longitudinal beam structure 31, the first extension beam group 3141 and the second extension beam group 3142 may be arranged at intervals, which is beneficial to the reduction in the manufacturing difficulty of the rear floor frame 3.

In some embodiments of the present invention, as shown in FIG. 1 and FIG. 2, in the third direction, the length of the first sub-cross beam 321 may be K5, and the length of the second sub-cross beam 322 may be K6, where K6 ≤ K5, meaning that the length of the first sub-cross beam 321 may be greater than or equal to the length of the second sub-cross beam 322. With such an arrangement, a length relationship between the first sub-cross beam 321 and the second sub-cross beam 322 can be made reasonable, which is beneficial to the improvement of the structural strength and durability of the rear floor frame 3. Thus, the structural strength requirements for the vehicle body can be satisfied by the rear floor frame 3, and the safety of the vehicle can be improved.

In some embodiments of the present invention, as shown in FIG. 1 to FIG. 3, the rear floor frame 3 may further include a third cross beam 33. The third cross beam 33 may be connected between the first longitudinal beam body 3111 and the second longitudinal beam body 3113. That is, an end of the third cross beam 33 may be connected to the first longitudinal beam body 3111, and the other end of the third cross beam 33 may be connected to the second longitudinal beam body 3113. Moreover, the third cross beam 33 may be located between the first sub-cross beam 321 and the second sub-cross beam 322. It should be understood that the third cross beam 33 is not connected to the extension beams 313 of the first longitudinal beam body 3111 and the extension beams 313 of the second longitudinal beam body 3113. This arrangement eliminates the need for each of the first longitudinal beam body 3111 and the second longitudinal beam body 3113 to have an extension beam 313 connected to the third cross beam 33, which can reduce the number of extension beam groups 314 and prevent the plurality of extension beam groups 314 from being located too close. Therefore, it is beneficial to the reduction in the manufacturing difficulty of the rear floor frame 3. Moreover, by arranging the third cross beam 33 between the first sub-cross beam 321 and the second sub-cross beam 322, it is beneficial to an improvement in a structural strength of a middle part of the rear floor frame 3.

In some exemplary embodiments of the present invention, the third cross beam 33 may be welded to both the first longitudinal beam body 3111 and the second longitudinal beam body 3113 by overlapping flanges.

As shown in FIG. 3, in the first direction (i.e., the length direction of the vehicle, i.e., the X direction shown in FIG. 3), a distance between the third cross beam 33 and the first sub-cross beam 321 may be M8, and a distance between the third cross beam 33 and the second sub-cross beam 322 may be M9, where 0.854M9 ≤ M8 ≤ 1.154M9, i.e., M8 may be any value ranging from 0.854M9 to 1.154M9. For example, M8 may be, but not limited to, 0.854M9, 0.954M9, 1.023M9, 1.154M9, or the like. With such an arrangement, it is possible to allow for a reasonable proportional relationship between the distance M8 between the third cross beam 33 and the first sub-cross beam 321 and the distance M9 between the third cross beam 33 and the second sub-cross beam 322, which is beneficial to the improvement of the structural strength and durability of the rear floor frame 3.

In some embodiments of the present invention, as shown in FIG. 11, in the first direction (i.e., the length direction of the vehicle, i.e., the X direction shown in FIG. 11), a spacing between the second sub-cross beam 322 and the battery pack 5 may be M10, where 600 mm ≤ M10 ≤ 750 mm, i.e., M10 may be any value ranging from 600 mm to 750 mm. For example, M10 may be, but not limited to, 600 mm, 661 mm, 670 mm, 750 mm, or the like. With such an arrangement, the spacing between the second sub-cross beam 322 and the battery pack 5 can be made reasonable, which is beneficial to providing reliable protection for the battery pack 5.

In some embodiments of the present invention, as shown in FIG. 11, in the first direction (i.e., the length direction of the vehicle, i.e., the X direction shown in FIG. 11), a spacing between the third cross beam 33 and the battery pack 5 may be M11, where 250mm ≤ M11 ≤ 350mm, i.e., M11 may be any value ranging from 250 mm to 350 mm. For example, M11 may be, but not limited to, 250 mm, 300 mm, 305 mm, 350 mm, or the like. With such an arrangement, the spacing between the third cross beam 33 and the battery pack 5 can be made reasonable, which is beneficial to the provision of reliable protection for the battery pack 5.

In some embodiments of the present invention, as shown in FIG. 11, in the first direction (i.e., the length direction of the vehicle, i.e., the X direction shown in FIG. 11), the spacing between the second sub-cross beam 322 and the battery pack 5 may be M10, and the spacing between the third cross beam 33 and the battery pack 5 may be M11, where 0.4 ≤ M11/M10 ≤ 0.5, i.e., a ratio of M11 to M10 (M11/M10) may be any value ranging from 0.4 to 0.5. For example, M11/M10 may be, but not limited to, 0.4, 0.448, 0.461, 0.5, or the like. With such an arrangement, it is possible to allow for a reasonable proportional relationship between the spacing M10 between the second sub-cross beam 322 and the battery pack 5 and the spacing M11 between the third cross beam 33 and the battery pack 5, which is beneficial to a reduction in a probability of damage to the battery pack 5 in the event of a rear collision of the vehicle. Therefore, it is beneficial to the improvement of the safety of the vehicle.

In some embodiments of the present invention, as shown in FIG. 1 and FIG. 2, in the third direction, the length of the first sub-cross beam 321 may be K5, the length of the second sub-cross beam 322 may be K6, and a length of the third cross beam 33 may be K7, where K6 ≤ K5 ≤ K7, meaning that the length of the first sub-cross beam 321 may be greater than or equal to the length of the second sub-cross beam 322, and the length of the third cross beam 33 may be greater than or equal to the length of the first sub-cross beam 321. With such an arrangement, a length relationship among the first sub-cross beam 321, the second sub-cross beam 322, and the third cross beam 33 can be made reasonable, which is beneficial to the improvement of the structural strength and durability of the rear floor frame 3. Thus, the structural strength requirements for the vehicle body can be satisfied by the rear floor frame 3, and the safety of the vehicle can be improved.

In some embodiments of the present invention, as shown in FIG. 1 and FIG. 2, the rear floor frame 3 may further include an energy absorption member 34. The energy absorption member 34 may be provided on at least one end of the first longitudinal beam body 3111 and/or the second longitudinal beam body 3113.

Each of the first longitudinal beam body 3111 and the second longitudinal beam body 3113 may extend in the length direction of the vehicle (i.e., the X direction shown in FIG. 1). In some exemplary embodiments of the present invention, the energy absorption member 34 may be provided on a front end of the first longitudinal beam body 3111. In some exemplary embodiments of the present invention, the energy absorption member 34 may be provided on a rear end of the first longitudinal beam body 3111. In some exemplary embodiments of the present invention, the energy absorption member 34 may be provided on a front end of the second longitudinal beam body 3113. In some exemplary embodiments of the present invention, the energy absorption member 34 may be provided on a rear end of the second longitudinal beam body 3113.

In some exemplary embodiments of the present invention, a seal may be provided at an inner side of the sill beam 4. The seal may be configured to seal a gap between the vehicle body and the battery pack 5. The first longitudinal beam body 3111 and the second longitudinal beam body 3113 may be connected to the sill beam 4 and/or the seal. By providing the energy absorption member 34, in the event of a rear collision of the vehicle, the energy absorption member 34 can collapse and absorb energy to reduce a collision force transmitted to a front side of the vehicle, which can reduce an impact force on the battery pack as well as an impact force on a passenger in a passenger compartment. Therefore, it is beneficial to the improvement of the safety of the vehicle.

In some exemplary embodiments of the present invention, as shown in FIG. 1 and FIG. 2, the energy absorption member 34 may be provided on each of a rear end of the first longitudinal beam body 3111 and a rear end of the second longitudinal beam body 3113.

It should be explained that a shape and dimension of the energy absorption member 34 may vary according to a dimension of the vehicle's rear overhang.

The vehicle according to the embodiments of the present invention includes the body assembly 100 of the vehicle as described above. By designing the first longitudinal beam body 3111 to have the extension beam 313 extending towards the second longitudinal beam body 3113 and designing the second longitudinal beam body 3113 to have the extension beam 313 extending towards the first longitudinal beam body 3111, and connecting the cross beam structure 32 to the corresponding extension beam 313, the structural strength and durability of the rear floor frame 3 can be enhanced. In this way, the structural strength requirements for the body assembly 100 can be satisfied, and the safety of the vehicle can be improved. Moreover, the body assembly 100 with such a structure has excellent NVH performance, which can enhance the user's driving experience.

In the description of the present invention, it should be understood that, the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings, and is only for the convenience of describing the present invention and simplifying the description, rather than indicating or implying that the associated device or element must have a specific orientation, or be constructed and operated in a specific orientation, and therefore cannot be understood as a limitation of the present invention.

In the description of the present invention, "the first feature" and "the second feature" may include one or more of these features.

In the description of the present invention, "plurality" means two or more.

In the description of the present invention, the first feature "on" or "under" the second feature may mean that the first feature is in direct contact with the second feature, or the first and second features are in indirect contact through another feature between the first and second features.

In the description of the present invention, the first feature "above" the second feature means that the first feature is directly above or obliquely above the second feature, or simply means that the level of the first feature is higher than that of the second feature.

Throughout this specification, description with reference to "an embodiment", "some embodiments", "an illustrative embodiment", "an example", "a specific example", "some examples", or the like means that a particular feature, structure, material, or characteristic described in connection with the embodiment or example is included in at least one embodiment or example of the present invention. The appearances of the above phrases in various places throughout this specification are not necessarily referring to the same embodiment or example of the present invention. Further, the particular features, structures, materials, or characteristics described here may be combined in any suitable manner in one or more embodiments or examples.

Although embodiments of the present invention have been illustrated and described, it is conceivable for those of ordinary skill in the art that various changes, modifications, replacements, and variations can be made to these embodiments without departing from the principles and spirit of the present invention. The scope of the present invention shall be defined by the claims as appended and their equivalents.

## Claims

1. A body assembly of a vehicle, **characterized in that** the body assembly comprises:
a rear floor frame comprising a longitudinal beam structure and a cross beam structure, wherein the longitudinal beam structure comprises a plurality of longitudinal beam bodies, the plurality of longitudinal beam bodies comprising a first longitudinal beam body and a second longitudinal beam body that are spaced apart from each other and arranged opposite to each other, and the first longitudinal beam body having an extension beam that extends towards the second longitudinal beam body and/or the second longitudinal beam body having an extension beam that extends towards the first longitudinal beam body, and wherein the cross beam structure is connected between the first longitudinal beam body and the second longitudinal beam body, the cross beam structure being connected to a corresponding extension beam of the extension beams; and
a sill beam connected to the longitudinal beam structure.

2. The body assembly according to claim 1, wherein each of the first longitudinal beam body and the second longitudinal beam body has the extension beam, wherein:
the extension beam of the first longitudinal beam body and the extension beam of the second longitudinal beam body are arranged to face towards and spaced apart from each other; and
two ends of the cross beam structure are connected to corresponding extension beams, respectively.

3. The body assembly according to claim 1 or 2, wherein each of the first longitudinal beam body and the second longitudinal beam body has a plurality of extension beams, the plurality of extension beams of the first longitudinal beam body and the plurality of extension beams of the second longitudinal beam body being in one-to-one correspondence to form a plurality of extension beam groups, and the cross beam structure being connected between two extension beams of each of the plurality of extension beam groups.

4. The body assembly according to claim 3, wherein the plurality of extension beam groups are sequentially arranged at intervals in a first direction of the rear floor frame.

5. The body assembly according to claim 4, wherein:
the plurality of extension beam groups comprise a first extension beam group and a second extension beam group; and
the cross beam structure comprises a first sub-cross beam and a second sub-cross beam, the first sub-cross beam being connected between two extension beams of the first extension beam group, and the second sub-cross beam being connected between two extension beams of the second extension beam group.

6. The body assembly according to any one of claims 1 to 5, further comprising a battery pack, wherein in a second direction of the rear floor frame, an overlapping region exists between an orthographic projection of the cross beam structure and an orthographic projection of the battery pack.

7. The body assembly according to claim 5, further comprising a battery pack, wherein:
in the first direction, a distance between the first sub-cross beam and a front end of the longitudinal beam structure is smaller than a distance between the first sub-cross beam and a rear end of the longitudinal beam structure; and
in the second direction of the rear floor frame, an overlapping region exists between an orthographic projection of the first sub-cross beam and an orthographic projection of the battery pack, the second direction being perpendicular to the first direction.

8. The body assembly according to claim 5 or 7, wherein in the first direction, a distance between the second sub-cross beam and a front end of the longitudinal beam structure is greater than a distance between the second sub-cross beam and a rear end of the longitudinal beam structure.

9. The body assembly according to any one of claims 1 to 8, further comprising a battery pack, wherein the battery pack has a first connection member connected to an end of the sill beam close to the longitudinal beam structure.

10. The body assembly according to claim 9, wherein the first connection member has a first mounting portion adapted to be mounted to the sill beam in a fitting manner, wherein in a third direction of the rear floor frame, a spacing between the first mounting portion and the longitudinal beam structure is L3, where 30 mm≤L3≤80 mm.

11. The body assembly according to claim 9 or 10, wherein:
a plurality of sill beams are provided and arranged at intervals in the third direction of the rear floor frame; and
a plurality of first connection members are provided and arranged at two opposite sides of a body of the battery pack in the third direction, the plurality of first connection members being connected to the plurality of sill beams, respectively.

12. The body assembly according to claim 11, wherein the battery pack further has a second connection member connected to the extension beam.

13. The body assembly according to claim 12, wherein the second connection member has a second mounting portion adapted to be mounted to the extension beam in a fitting manner,
wherein in a first direction of the rear floor frame, a spacing between the second mounting portion and the battery pack is L4, where 1 mm≤L4≤60 mm, wherein the third direction is perpendicular to the first direction.

14. The body assembly according to claim 12 or 13, wherein the battery pack comprises a first sub-body and a second sub-body connected to each other, wherein:
in the third direction, a width of the second sub-body is smaller than a width of the first sub-body;
the second connection member is located at an end of the second sub-body away from the first sub-body; and
the first connection member is located at a side edge of the first sub-body.

15. The body assembly according to claim 5, 7, or 8, further comprising a third cross beam connected between the first longitudinal beam body and the second longitudinal beam body and located between the first sub-cross beam and the second sub-cross beam.

16. The body assembly according to any one of claims 1 to 15, further comprising an energy absorption member provided on at least one end of the first longitudinal beam body and/or the second longitudinal beam body.

17. A vehicle, comprising:
the body assembly according to any one of claims 1 to 16.
